# EUROPÄISCHE PATENTANMELDUNG

(11) **EP 4 657 367 A1**
(43) Veröffentlichungstag der Anmeldung: **03.12.2025**
(21) Anmeldenummer: 24178256.4
(22) Anmeldetag: 27.05.2024
(51) Int. Cl.: G06T 7/00

(54) **VERFAHREN UND SYSTEM ZUR ÜBERWACHUNG EINES HERSTELLUNGSPROZESSES FÜR EIN PRODUKT**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zur Überwachung eines Herstellungsprozesses für ein Produkt, umfassend die Schritte:
a) Erfassen (II) von Bilddaten des hergestellten Produkts mit Komponenten,
b) Bereitstellen (RET) einer Materialliste mit den Komponenten des hergestellten Produkts,
c) Kodieren (I_ENC) der Bilddaten durch Anwendung eines Modells auf Basis künstlicher Intelligenz und Bereitstellen der kodierten Bilddaten als Bild-Embedding,
d) Kodieren (P_ENC) der Materialliste durch Anwendung eines bereitgestellten Modells auf Basis künstlicher Intelligenz und Bereitstellen der kodierten Materialliste als Eingabeaufforderung,
e) Decodieren (M_DEC) des Bild-Encodings mithilfe der Eingabeaufforderung,
f) Segmentierung (SML) der decodierten Bild-Encodings und Erzeugen von Masken und Kennzeichen für die Komponenten der decodierten Bild-Embeddings,
g) Konvertieren (CML) der Masken und der Kennzeichen für die Komponenten gemäß der Materialliste,
h) Prüfen (CHK), ob die konvertierten Masken und Kennzeichen der Komponenten mit den Komponenten der Materialliste übereinstimmen, und Ausgabe des Ergebnisses der Prüfung.

## Beschreibung

Die Erfindung betrifft ein computer-implementiertes Verfahren zur Überwachung eines Herstellungsprozesses für ein Produkt und ein System hierfür.

Bei einer Überwachung eines Herstellungsprozesses werden üblicherweise verschiedene Technologien eingesetzt, um die Herstellung von Produkten während der Montage- oder Produktionsphase zu überwachen und zu steuern.

Dabei gilt es sicherzustellen, dass der Montageprozess den Qualitätsstandards entspricht, die Spezifikationen einhält und effizient arbeitet.

Im Zusammenhang mit der Bildverarbeitung für die Montageüberwachung liegt im Stand der Technik der Schwerpunkt auf dem Einsatz von Computer-Vision-Technologien, um die Überwachungsaufgaben zu verbessern und zu automatisieren.

Jedoch liegt im Stand der Technik häufig ein Mangel vor, dass verfügbare Computer-Vision-Systemen zur Montageüberwachung nur eine stark eingeschränkte Anpassungsfähigkeit an hochkomplexe Montageprozesse, insbesondere bei unterschiedlichen Produktdesigns oder Komponenten aufweisen.

Die Anpassungsfähigkeit in komplexen Montageprozessen ist im Stand der Technik häufig auf folgende Ansätze beschränkt:
- Handgefertigte Funktionen und Regeln: Klassische Computer-Vision-Systeme verlassen sich oft auf manuell entworfene Funktionen und Regeln, um visuelle Daten zu interpretieren. Ingenieure identifizieren spezifische Muster oder Merkmale, die für den Montageprozess relevant sind, und kodieren sie in das System. Dieser Ansatz ist zwar für klar definierte Szenarien effektiv, aber es fehlt ihm an Anpassungsfähigkeit an Änderungen oder Variationen.
- Heuristik-basierte Ansätze: Heuristische Methoden beinhalten die Verwendung vordefinierter Regeln oder Strategien, die auf Domänenwissen basieren. Diese Regeln leiten den Entscheidungsprozess des Bildverarbeitungssystems als Reaktion auf bestimmte visuelle Hinweise. Heuristiken können zwar in kontrollierten Umgebungen effektiv sein, aber sie können sich nur schwer an unvorhergesehene Schwankungen anpassen.
- Vorlagenabgleich: Vorlagenabgleich ist eine Technik, bei der vordefinierte Vorlagen von Objekten oder Merkmalen mit den beobachteten visuellen Daten verglichen werden. Obwohl es für bestimmte Anwendungen mit konsistenten Mustern geeignet ist, kann es an Robustheit mangeln, wenn es mit Abweichungen oder Abweichungen von den erwarteten Vorlagen konfrontiert wird.

- Regelbasierte Systeme: Klassisches maschinelles Sehen verwendet häufig regelbasierte Systeme, bei denen die Entscheidungsfindung durch eine Reihe vordefinierter Regeln geleitet wird. Diese Regeln werden in der Regel basierend auf dem erwarteten Verhalten des Bestückungs-Prozesses erstellt. Die Anpassung dieser Regeln an Änderungen kann jedoch zeitaufwändig und herausfordernd sein.
- Manuelle Kalibrierung: Klassische Bildverarbeitungssysteme erfordern häufig eine manuelle Kalibrierung, um Änderungen der Lichtverhältnisse, Kamerawinkel oder anderer Umgebungsfaktoren zu berücksichtigen. Diese manuelle Anpassung ist ein reaktiver Ansatz und bietet möglicherweise keine Echtzeitanpassung an dynamische Montageprozesse.

Es ist wichtig zu beachten, dass klassische Computer-Vision-Systeme bei der Bewältigung der Komplexität und Variabilität moderner Fertigungsumgebungen auf Einschränkungen stoßen können.

Im Gegensatz zu fortschrittlichen Ansätzen des maschinellen Lernens erfordern klassische Methoden möglicherweise umfangreiche manuelle Eingriffe und lassen sich möglicherweise nicht leicht an unvorhergesehene Änderungen in Montageprozessen anpassen.

Der Übergang von klassischer Computer Vision zu adaptiveren und lernbasierten Ansätzen stellt einen bedeutenden Fortschritt bei der Bewältigung der Herausforderung der Anpassungsfähigkeit dar.

Es ist daher Aufgabe der Erfindung, ein Verfahren bereitzustellen, welches besonders einfach an Änderungen im Produkt-Design anpassbar ist und daher einfacher und effizienter an ein herzustellendes Produkt angepasst werden kann, und zudem automatisierbar ist.

Die erfindungsgemäße Aufgabe wird durch ein computer-implementiertes Verfahren zur Überwachung eines Herstellungsprozesses für ein Produkt gelöst, umfassend die Schritte:
a) Erfassen von Bilddaten des hergestellten Produkts mit Komponenten,
b) Bereitstellen einer Materialliste mit den Komponenten des hergestellten Produkts,
c) Kodieren der Bilddaten durch Anwendung eines Modells auf Basis künstlicher Intelligenz und Bereitstellen der kodierten Bilddaten als Bild-Embedding,
d) Kodieren der Materialliste durch Anwendung eines bereitgestellten Modells auf Basis künstlicher Intelligenz und Bereitstellen der kodierten Materialliste als Eingabeaufforderung,
e) Decodieren des Bild-Encodings mithilfe der Eingabeaufforderung,
f) Segmentierung der decodierten Bild-Encodings und Erzeugen von Masken und Kennzeichen für die Komponenten der decodierten Bild-Embeddings,
g) Konvertieren der Masken und der Kennzeichen für die Komponenten gemäß der Materialliste,
h) Prüfen, ob die konvertierten Masken und Kennzeichen der Komponenten mit den Komponenten der Materialliste übereinstimmen, und Ausgabe des Ergebnisses der Prüfung.

Die Anpassungsfähigkeit der Produktions-Überwachung an Produkt-Variationen wird verbessert, indem der Abruf und die Codierung der Stückliste als Eingabeaufforderung integriert wird.

Diese Anpassungsfähigkeit ist ein entscheidender Vorteil gegenüber klassischen Bildverarbeitungssystemen, die oft auf festen Regeln beruhen und Schwierigkeiten haben, Änderungen in Produktdesigns oder Komponentenkonfigurationen zu bewältigen.

Ferner erlaubt die Integration fortschrittlicher Lerntechniken, einschließlich Instanz-Segmentierung und Stücklistenvergleich, die Verbesserung der Fähigkeit des Systems, aus Daten zu lernen und sich dynamisch an komplexe Montageszenarien anzupassen.

Diese Integration übertrifft klassische Bildverarbeitungssysteme, die auf manuellem Feature-Engineering und regelbasierten Methoden beruhen können.

Die Segmentierung beziehungsweise Instanz-Segmentierung im Schritt f) erfolgt unter Anwendung eines "zeitnahen Segmentierungs-Modells" (engl. "promptable segmentation model").

Das Kernkonzept der Prompt-Segmentierung nutzt die Leistungsfähigkeit von "Natural Language Processing" (kurz "NLP") und "Deep Learning", um Bilder basierend auf vom Benutzer bereitgestellten Eingabeaufforderungen zu segmentieren.

Anstatt ein Modell mit einem festen Satz von Objektklassen zu trainieren, können Sie das Zielobjekt durch Textbeschreibungen oder sogar ein Bild als Referenz definieren.

Dieser Ansatz bietet mehr Flexibilität und ermöglicht die Segmentierung einer breiteren Palette von Objekten, ohne dass umfangreiche Umschulungen für neue Datensätze erforderlich sind.

Zusätzlich verbessert sich die Generalisierbarkeit, denn die Modelle haben das Potenzial, zu lernen, und unsichtbare Objektkategorien basierend auf den bereitgestellten Eingabeaufforderungen zu segmentieren.

Bei einer bildbasierten Eingabeaufforderung stellt der Benutzer, manuell oder automatisiert, ein Bild als Referenz zur Verfügung (z. B. ein Bild einer korrekt bestückten Komponente) und das Modell lernt, Objekte ähnlich dem Referenzbild innerhalb des Zielbildes zu identifizieren und generiert entsprechend eine Segmentierungs-Maske.

Das Erzeugen und Trainieren des im Schritt d) bereitgestellten ML-Modells (engl. "machine learning", kurz ML) kann durch entsprechend gekennzeichnete Bilddaten erfolgen, welche beispielsweise als "gute" und "schlechte" Komponenten markiert sind.

Dabei kann es vorgesehen sein, dass unterschiedliche einzelne Komponenten für unterschiedliche Produkte verwendet werden.

Das ML-Modell selbst ist ein Modell auf Basis künstlicher Intelligenz und kann durch ein neuronales Netz in Form von Modell-Knoten und Modell-Gewichten beschrieben werden.

In der Mathematik ist eine Einbettung (engl. "embedding") eine Instanz einer mathematischen Struktur, die in einer anderen Instanz enthalten ist, beispielsweise einer Gruppe, die eine Untergruppe ist.

Eine Bildeinbettung beziehungsweise Bild-Embedding ist eine numerische Darstellung eines Bildes, die die Semantik der Inhalte im Bild kodiert.

Einbettungen werden durch Computer-Vision-Modelle berechnet, die normalerweise mit großen Datensätzen aus Text- und Bildpaaren trainiert werden

Mit anderen Worten sind Bild-Embeddings also numerische Darstellungen von Bildern, die deren semantische Bedeutung und visuelle Merkmale erfassen und können beispielsweise für Anwendungen wie Bildsuche, Bildklassifizierung, Bildwiederherstellung und Bildähnlichkeit eingesetzt werden.

In einer Weiterbildung der Erfindung ist es vorgesehen, dass bei der Segmentierung das Identifizieren und das Abgrenzen einzelner Objekte innerhalb eines Bildes durchgeführt wird.

Dadurch werden die Komponenten des Produkts für die Analyse beziehungsweise den Vergleich voneinander getrennt, was die Flexibilität und Genauigkeit der Herstellungs-Überwachung verbessert.

In einer Weiterbildung der Erfindung ist es vorgesehen, dass die Objekte Komponenten des hergestellten Produkts sind und das Bild durch Bilddaten definiert ist.

In einer Weiterbildung der Erfindung ist es vorgesehen, dass das Modell ein Grund-Modell ist.

Dabei wird angenommen, dass spezielle Modelle, wie Gründungs- oder Grund-Modelle (engl. "industrial foundation model", kurz IFM) dazu besonders günstig angewendet werden können.

Demzufolge ist es besonders günstig, wenn das im Schritt d) bereitgestellte Modell ein IFM ist.

Ein Grund-Modell oder Basis-Modell ist ein maschinelles Lern- oder Deep-Learning-Modell, das auf breiten Daten trainiert wird, sodass es in einer Vielzahl von Anwendungsfällen angewendet werden kann.

Grund-Modelle sind Allzwecktechnologien, die eine Vielzahl von Anwendungsfällen unterstützen können.

Die Erstellung grundlegender Modelle ist oft sehr ressourcenintensiv. Daher kann es wesentlich effizienter sein, ein bestehendes Basismodell für einen bestimmten Anwendungsfall anzupassen oder auch direkt zu verwenden.

Die erfindungsgemäße Aufgabe wird auch durch ein System zur Überwachung eines Herstellungsprozesses für ein Produkt, welches durch eine Materialliste beschrieben ist, gelöst, umfassend ein Produktionssystem, welches dazu eingerichtet ist, das Produkt herzustellen, und ferner umfassend eine Überwachungsvorrichtung, welche einen Sensor und eine Rechenvorrichtung mit einem Prozessor und einem Speicher aufweist, und der Sensor dazu eingerichtet ist, das Produkt mit Bilddaten zu erfassen, und die Rechenvorrichtung dazu eingerichtet ist, das erfindungsgemäße Verfahren auszuführen.

Im Nachfolgenden wird die Erfindung anhand eines Ausführungsbeispiels näher erläutert. Die Figuren zeigen in
- Fig. 1: ein Blockschaltbild für ein erfindungsgemäßes System,
- Fig. 2: ein Flussdiagramm für ein Ausführungsbeispiel des erfindungsgemäßen Verfahrens,
- Fig. 3: ein Flussdiagramm mit Details für das Ausführungsbeispiel der Fig. 2.

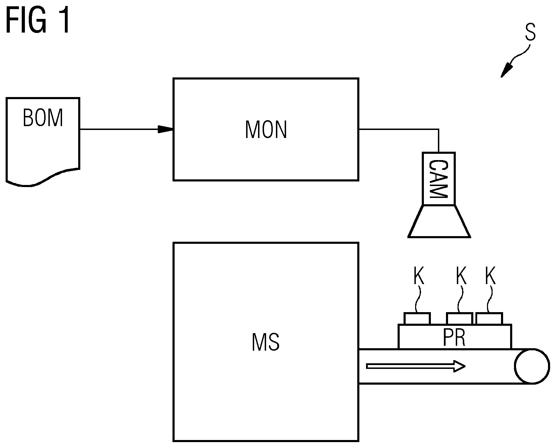

Fig. 1 stellt ein Blockschaltbild für ein erfindungsgemäßes System S zur Überwachung eines Herstellungsprozesses für ein Produkt PR dar.

Im diesem Ausführungsbeispiel ist das Produkt PR eine Leiterplatte, welche mit Komponenten K bestückt wird.

Das Produkt PR ist durch eine Materialliste BOM beschrieben.

Das System umfasst ein Produktionssystem MS, beispielsweise eine Vorrichtung zur Bestückung von bereitgestellten elektronischen Leiterplatten mit dafür vorgesehenen elektronischen Komponenten K, und eine Überwachungsvorrichtung MON zur Überwachung und visuellen Kontrolle der Bestückung und hergestellter Verbindungen zwischen einer Leiterplatte und den bestückten Komponenten.

Das Produktionssystem MS ist dementsprechend dazu eingerichtet, das Produkt PR herzustellen.

Die Überwachungsvorrichtung MON weist einen bildgebenden Sensor CAM, wie eine Kamera, und eine Rechenvorrichtung mit einem Prozessor und einem Speicher auf.

Der Sensor kann aber auch ein anderer bildgebender Sensor sein, wie beispielsweise ein Radar-Sensor oder ein Ultraschall-Sensor, wobei je nach Anwendung die Bildauflösung des Sensors hoch oder niedrig sein kann.

Der Sensor CAM ist dazu eingerichtet, das Produkt PR mit Bilddaten IMG zu erfassen.

Die Rechenvorrichtung ist dazu eingerichtet, das erfindungsgemäße Verfahren gemäß den nachfolgenden Erläuterungen auszuführen.

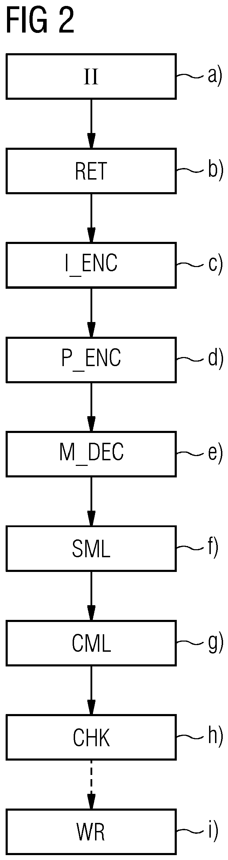

**Fig. 2** zeigt ein Flussdiagramm für ein Ausführungsbeispiel des erfindungsgemäßen Verfahrens zur Überwachung eines Herstellungsprozesses für ein Produkt PR, umfassend die Schritte:
a) Erfassen II von Bilddaten IMG des hergestellten Produkts PR mit Komponenten K,
b) Bereitstellen RET einer Materialliste BOM mit den Komponenten K des hergestellten Produkts PR,
c) Kodieren I_ENC der Bilddaten IMG durch Anwendung eines Modells auf Basis künstlicher Intelligenz und Bereitstellen der kodierten Bilddaten als Bild-Embedding IMG_EMB,
d) Kodieren P_ENC der Materialliste BOM durch Anwendung eines bereitgestellten Modells auf Basis künstlicher Intelligenz und Bereitstellen der kodierten Materialliste als Eingabeaufforderung,
e) Decodieren M_DEC des Bild-Encodings mithilfe der Eingabeaufforderung,
f) Segmentierung SML der decodierten Bild-Encodings und Erzeugen von Masken und Kennzeichen für die Komponenten K der decodierten Bild-Embeddings IMG_EMB,
g) Konvertieren CML der Masken und der Kennzeichen für die Komponenten K gemäß der Materialliste BOM,
h) Prüfen CHK, ob die konvertierten Masken und Kennzeichen der Komponenten K mit den Komponenten K der Materialliste BOM übereinstimmen, und Ausgabe des Ergebnisses der Prüfung.

Ein oder mehrere Schritte des Verfahrens sind Computer-implementiert.

Bei der Segmentierung wird das Identifizieren und das Abgrenzen einzelner Objekte innerhalb eines Bildes durchgeführt, wobei die Objekte Komponenten K des hergestellten Produkts PR sind und das Bild durch die Bilddaten IMG definiert ist.

Das angewandte Modell ist ein bereitgestelltes Grund-Modell IFM (engl. "industrial foundation model").

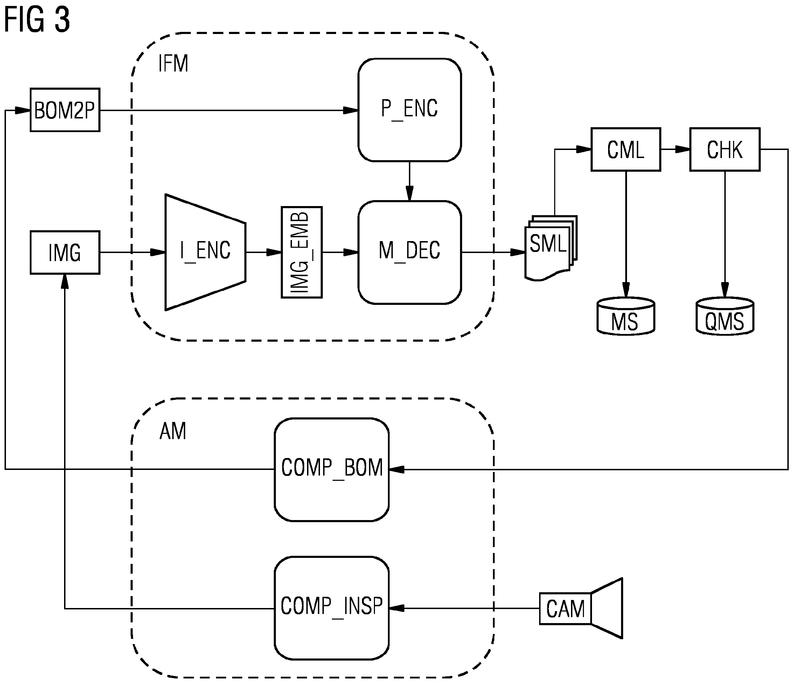

**Fig. 3** zeigt ein Flussdiagramm mit Details für das Ausführungsbeispiel der vorhergehenden Figur mit einem Bestückungsüberwachungs-System AM.

Es gelten auch die Ausführungen zur vorhergehenden Figuren.

Im Schritt a) wird ein Bild IMG von der bestückten Leiterplatte PR erfasst, wobei dieses

Bild IMG in den nachfolgenden Schritten als Eingabedaten dient.

Im Schritt b) wird die Materialliste beziehungsweise Stückliste BOM für das Produkt PR mit den Komponenten K bereitgestellt und durch ein Konvertieren BOM2P in eine Eingabeaufforderung umgewandelt.

Die Stückliste BOM ist eine Liste der Komponenten K und deren Mengen, die für die Baugruppe beziehungsweise das Produkt PR benötigt werden.

Durch das Abrufen der spezifischen Stückliste, die für den aktuellen Montageschritt relevant ist, wird sichergestellt, dass das KI-System die richtige Referenz für den nachfolgenden Vergleich mit den erfassten Bilddaten hat.

Im Schritt c) erfolgt das Kodieren I_ENC der Bilddaten IMG durch Anwendung eines KI-Modells.

Im Schritt d) wird die abgerufene Stückliste BOM mithilfe des KI-Modells in ein Format codiert, das als Eingabeaufforderung für das KI-System dient.

Diese Kodierung hilft dem System, die erwarteten Komponenten und alle anderen relevanten Details zu verstehen, die für die anschließende Analyse unerlässlich sind.

Im Schritt e) erfolgt das Decodieren M_DEC des Bild-Encodings mithilfe des KI-Modells.

Im Schritt f) wird die Instanz-Segmentierung durchgeführt.

Die Instanz-Segmentierung ist eine Computer-Vision-Aufgabe, bei der einzelne Objekte innerhalb eines Bildes identifiziert und abgegrenzt werden.

Im Rahmen der Überwachung der Leiterplattenbestückung zielt dieser Schritt darauf ab, jedes Bauteil auf der Leiterplatte genau zu lokalisieren und zu umreißen und voneinander zu unterscheiden.

Im Schritt g) erfolgt das Konvertieren CML der Masken und der Kennzeichen.

Der Instanz-Segmentierungsprozess generiert Masken und Etiketten, die jedem identifizierten Bauteil auf der Leiterplatte entsprechen.

Diese Masken und Beschriftungen werden dann in ein Format konvertiert, das an der Stückliste ausgerichtet ist und eine Darstellung der Baugruppe erstellt, wie sie vom Bildverarbeitungssystem geprüft wird.

Im Schritt h) vergleicht das System S die geprüfte Baugruppe PR, die aus den Segmentierungsergebnissen abgeleitet wurde, mit der Stückliste BOM aus dem PLM-System.

Es wird auf Diskrepanzen wie fehlende Komponenten, falsche Platzierungen oder Abweichungen von der erwarteten Baugruppenkonfiguration geprüft.

In diesem Schritt wird im Wesentlichen überprüft, ob die Baugruppe PR den angegebenen Anforderungen entspricht.

Dies erfolgt durch den Vergleich der Materialliste COMP_BOM mit den durch die Kamera-Inspektion COMP _INSP erfassten Bilddaten IMG.

Optional kann das Ergebnis in einem Schritt i) in einen Speicher eines Qualitätsmanagement-Systems QMS und/oder in einen Speicher des Produktionssystem MS geschrieben werden, beispielsweise das Ergebnis der Montageprüfung, ob es die Richtigkeit bestätigt oder Unstimmigkeiten feststellt wird.

Die Speicherung in einem Speicher dient zur Aufzeichnung und Dokumentation des Herstellungsprozesses für das Produkt PR, um eine Rückverfolgbarkeit von Fehlern oder Mängeln zu gewährleisten und wertvolle Daten für eine Prozessverbesserung und -analyse bereitzustellen.

Zusammenfassend skizzieren diese Schritte einen umfassenden Prozess zur Überwachung der Leiterplattenbestückung mithilfe von Computer Vision.

Die Integration von Stücklisteninformationen, Instanz-Segmentierung und Vergleich mit erwarteten Baugruppenkonfigurationen ermöglicht eine automatisierte Qualitätskontrolle und steigert die Effizienz des Fertigungsprozesses.

Der letzte Schritt, das Schreiben WR der Ergebnisse in das Qualitätsmanagement-System QMS, stellt sicher, dass die Erkenntnisse aus dem Bildverarbeitungssystem zur allgemeinen Qualitätssicherung und zur kontinuierlichen Verbesserung beitragen.

*Unabhängig vom grammatikalischen Geschlecht eines bestimmten Begriffes sind Personen mit männlicher, weiblicher oder anderer Geschlechteridentität mit umfasst.*

### Bezugszeichenliste

- AM: Bestückungs-Überwachung (engl. "quality assembly monitoring")
- BOM: Stückliste, Materialliste (engl. "bill of material"),
- BOM2P: Konvertierung der Materialliste (engl. "conversion bill of material"), Konvertierung in Eingabeaufforderung
- CAM: Kamera
- CHK: Prüfung der Bestückung (engl. "check assembly")
- CML: Konvertierung von Masken und Kennzeichen
- COMP_BOM: Vergleich der Materialliste (engl. "compare bill of material")
- COMP _INSP: Vergleich der Inspektion (engl. "compare inspection")
- II: Bilderfassung (engl. "ingest image")
- I_ENC: Bild-Encoder (engl. "image encoder")
- IFM: Industrielles Grund-Modell (engl. "industrial foundation model")
- IMG: Bild (engl. "image")
- IMG_EMB: Bild-Einbettung (engl. "image embedding")
- K: Komponenten des Produkts
- M_DEC: Masken-Decoder (engl. "mask decoder")
- M2BOM: Konvertierung der Masken zur Materialliste (engl. "bill of material")
- MON: Überwachungsvorrichtung
- MS: Produktionssystem (engl. "manufacturing system"), Produktionsvorrichtung
- P_ENC: Eingabeaufforderungs-Encoder (engl. "prompt encoder")
- PR: Produkt
- QMS: Qualitäts-Management-System (engl. "quality management system")
- RET: Bereitstellen
- S: System
- SML: Segmentierung von Masken und Kennungen (engl. "segmentation masks and labels"), engl. "perform instance segmentation"
- WR: Datensicherung in Speicher

## Patentansprüche

1. Computer-implementiertes Verfahren zur Überwachung eines Herstellungsprozesses für ein Produkt (PR), umfassend die Schritte:
a) Erfassen (II) von Bilddaten (IMG) des hergestellten Produkts (PR) mit Komponenten (K),
b) Bereitstellen (RET) einer Materialliste (BOM) mit den Komponenten (K) des hergestellten Produkts (PR),
c) Kodieren (I_ENC) der Bilddaten (IMG) durch Anwendung eines Modells auf Basis künstlicher Intelligenz und Bereitstellen der kodierten Bilddaten als Bild-Embedding (IMG_EMB),
d) Kodieren (P_ENC) der Materialliste (BOM) durch Anwendung eines bereitgestellten Modells auf Basis künstlicher Intelligenz und Bereitstellen der kodierten Materialliste als Eingabeaufforderung,
e) Decodieren (M_DEC) des Bild-Encodings mithilfe der Eingabeaufforderung,
f) Segmentierung (SML) der decodierten Bild-Encodings und Erzeugen von Masken und Kennzeichen für die Komponenten (K) der decodierten Bild-Embeddings (IMG_EMB),
g) Konvertieren (CML) der Masken und der Kennzeichen für die Komponenten (K) gemäß der Materialliste (BOM),
h) Prüfen (CHK), ob die konvertierten Masken und Kennzeichen der Komponenten (K) mit den Komponenten (K) der Materialliste (BOM) übereinstimmen, und Ausgabe des Ergebnisses der Prüfung.

2. Verfahren nach dem vorhergehenden Anspruch, wobei bei der Segmentierung das Identifizieren und das Abgrenzen einzelner Objekte innerhalb eines Bildes durchgeführt wird.

3. Verfahren nach dem vorhergehenden Anspruch, wobei die Objekte Komponenten des hergestellten Produkts sind und das Bild durch Bilddaten (IMG) definiert ist.

4. Verfahren nach einem der vorhergehenden Ansprüche, wobei das Modells ein Grund-Modell (IFM) ist.

5. System zur Überwachung eines Herstellungsprozesses für ein Produkt (PR), welches durch eine Materialliste (BOM) beschrieben ist, umfassend ein Produktionssystem (MS), welches dazu eingerichtet ist, das Produkt (PR) herzustellen, und ferner umfassend eine Überwachungsvorrichtung (MON), welche einen Sensor (CAM) und eine Rechenvorrichtung mit einem Prozessor und einem Speicher aufweist, und der Sensor (CAM) dazu eingerichtet ist, das Produkt (PR) mit Bilddaten (IMG) zu erfassen, und die Rechenvorrichtung dazu eingerichtet ist, das Verfahren nach einem der vorhergehenden Ansprüche auszuführen.
